# EUROPEAN PATENT APPLICATION

(11) **EP 4 700 235 A1**
(43) Date of publication of application: **25.02.2026**
(21) Application number: 24196053.3
(22) Date of filing: 23.08.2024
(51) Int. Cl.: F03D 7/02, B63B 35/44

(54) **OPERATING A FLOATING WIND TURBINE**

(71) Applicant: Siemens Gamesa Renewable Energy A/S, 7330 Brande (DK)
(72) Inventor: Cavichioli Gonzaga, Carlos Alberto, 7100 Vejle (DK); Laugesen, Kasper, 6700 Esbjerg (DK)
(74) Representative: SGRE-Association

(57) **Abstract**

A method of operating a floating wind turbine (1), FWT, is provided. The floating wind turbine (1) is exposed to waves during operation, the waves causing a wave induced motion of the floating wind turbine (1). The floating wind turbine (1) is configured to operate a protective function. The method comprises obtaining, during operation of the floating wind turbine (1), monitored wave data (70) indicative of a wave height of the waves the floating wind turbine (1) is exposed to during operation. It further comprises processing the monitored wave data (70) to obtain processed wave data, wherein the processing comprises at least a processing by descriptive statistical analysis, comparing the processed wave data to a threshold (140) that corresponds to a predetermined sea state and activating the protective function upon detecting that the processed wave data reaches or exceeds the threshold (140).

## Description

### FIELD OF THE INVENTION

The present invention relates to a method of operating a floating wind turbine, wherein the floating wind turbine is configured to operate a protective function. It further relates to a control system for controlling the operation of a floating wind turbine and to a respective computer program.

### BACKGROUND

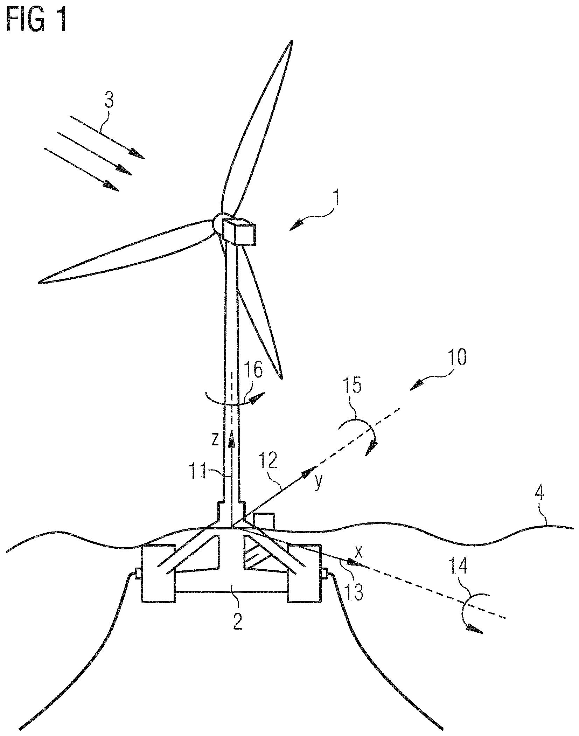

As it is not economical or practically possible to install wind turbines at deeper offshore sites, use of floating wind turbines (FWT) is known. Known types of floating wind turbines include wind turbines with a semi-submersible floater, a spar buoy, a tension leg platform (TLP), and the like. Mooring lines are used to anchor the floating wind turbine to the installation site and ensure station keeping of the floating wind turbine. While moorings for semi-submersible and spar type floating wind turbines have a certain amount of slack that allows some movement of the floating wind turbine, other types, such as a tension leg platform, suppress this movement. As can be seen in figure 1, a floating wind turbine 1 comprises a floater 2. The motion of the floater 2 may be divided into six individual degrees of freedom 10 namely three translations: surge 13 (motion in x direction), sway 12 (motion in y direction) and heave 13 (motion in z direction), and three rotations: floater roll 14 (rotation around x axis), floater pitch 15 (rotation around y axis) and floater yaw 16 (rotation around z axis). The origin of the reference coordinate system may general be chosen as desired; it has been shown practical to define the axes with respect to the orientation of the wind turbine rotor, but other definitions may be employed.

The freedom of movement of the wind turbine may be a disadvantage in severe sea states, in which the FWT is exposed to high winds 3 and large waves 4. In such wind and sea states, motions of the wind turbine may cause damaging loads on the wind turbine components. A possible solution would be to use a warning system based on forecasted weather predictions to predict such severe sea states and shut down the wind turbine if such state is expected, in order to avoid high loads on the components.

As a result, the energy production of the wind turbine is stopped and thereby, the motion and loading is not driven by the turbine being in operation, which results in additional stress on the system. It is also known to include the load case of such severe state with a higher partial safety factor in the design requirements for the wind turbine. This may however result in an over-dimensioning of the structural components of the wind turbine that is not required for most operating states, which may lead to increased manufacturing costs.

Therefore, it is desirable to avoid unnecessary shutdowns due to the uncertainty of weather forecasts and human interventions that may result in a loss of energy production. It is further desirable to avoid the need for high design load requirements of the wind turbine. It is in particular desirable to improve the safety of a floating wind turbine while avoiding loss of energy production.

### SUMMARY

Accordingly, there is a need to mitigate at least some of the drawbacks mentioned above, in particular to avoid loss of energy production of the wind turbine.

This need is met by the features of the independent claims. The dependent claims describe embodiments of the invention.

According to an aspect of the present invention, a method of operating a floating wind turbine, FWT, is provided. The floating wind turbine is exposed to waves during operation, the waves causing a wave induced motion of the floating wind turbine. The floating wind turbine is configured to operate a protective function. The method comprises obtaining, during operation of the floating wind turbine, monitored wave data indicative of a wave height of the waves to which the floating wind turbine is exposed during operation. It further comprises processing the monitored wave data to obtain processed wave data, wherein the processing comprising at least a processing by descriptive statistical analysis. The method further comprises comparing the processed wave data to a threshold that corresponds to a predetermined sea state and activating the protective function upon detecting that the processed wave data reaches or exceeds the threshold.

The threshold may for example indicate that a severe sea state or other sea state detrimental to the FWT operation is being approached or present. Depending on the type of the monitored wave data and the processing, the threshold may for example relate to an absolute value of a processed parameter, such as a parameter (mean) amplitude (e.g. heave motion amplitude, inclination or the like), a trend (e.g. (mean) rate of change of a monitored parameter value, e.g. mean maximum bending moment), a spread (e.g. standard deviation of a monitored parameter) or the like. A severe sea state may correspond to a condition in which the wave height causes a load on the components of the floating wind turbine that is not within the normal operating range of the components of the wind turbine. A severe sea state may be defined as known in the art, in particular from the appliable standards (e.g. IEC61400-3-1 or IEC61400-3-2).

By such method, the wind turbine does not need to be designed to withstand the extreme loads that may occur when operating in a severe sea state, since the protective function may be activated prior to reaching such severe sea state or if a statistical measure derived during processing, such as a trend, indicates that such sea state is likely to be reached soon. Material and thus weight may thereby be saved and the costs of manufacturing the FWT may be reduced. Further, an unnecessary triggering of a shut-down, which may result in loss of energy production, may be avoided. As the step of processing comprises a processing by descriptive statistical analysis, the computational effort to process the monitored wave data may be kept small. This may especially allow a quick comparison of the processed wave data to a predetermined threshold. Thus, a quick determination if the predetermined threshold is reached in order to determine if a predetermined sea state, e.g. a severe sea state, is being approached or is present may be obtained. As a result of this quick determination, it may be possible to activate in time the protective function to protect the wind turbine. For example, when directly acting on an amplitude of a detected motion, e.g. by taking a counter-measure when the wind turbine is hit by a large wave, such counter-measure may potentially increase the loads significantly. By employing the method and using the statistically processed data for triggering the mitigation action, such unfavorable situation may be avoided and the mitigation action may be taken in due time prior to the occurrence of the extreme load caused by such large wave.

The protective function may be configured to mitigate or counteract a condition in which a high load is exerted on one or plural components of the wind turbine. Consequently, the method may present a fast and efficient way to reduce or avoid such mechanical loads in a severe sea state, thus reducing the costs associated with turbine, tower and floating foundation design. The implementation of the method may reduce extreme loads such as a tower bottom bending moment, tip-to-tower clearance, blade root flap and edgewise and hub bending without stopping the wind turbine and thus the power production. Further, compared to conventional methods that rely on weather forecast to predict sea state and that shut down FWTs as a precautionary measure, unnecessary shut-downs may be prevented, as the actual sea conditions are monitored and used as a decision basis. The method does also not rely on human intervention or on monitoring of the data across multiple wind farms/sites. FWTs, which are generally located offshore, can in some situations only be re-started upon inspection of the wind turbine by service personnel, which may take a significant amount of time and may involve high costs. By avoiding such unnecessary shutdowns, the loss in energy production may therefore be reduced significantly.

Preferably, the monitored wave data corresponds to a motion parameter of the floating wind turbine and the processing by descriptive statistical analysis comprises determining a standard deviation or mean maximum amplitude of the monitored motion parameter and/or the monitored wave data corresponds to a load parameter, such as a bending moment of at least one rotor blade or of a tower of the floating wind turbine, and the processing by descriptive statistical analysis comprises determining an average change of the monitored load parameter. A motion parameter may for example be one or a combination of a floater, tower, and/or nacelle roll motion, pitch motion, heave motion, surge motion, or sway motion.

The threshold may correspond to the processed wave data, it may be a threshold for the processed wave data. For the above example, the threshold may be a threshold for a standard deviation of a monitored motion parameter, and/or a threshold for an average change of a monitored load parameter (e.g. bending moment), respectively.

According to an embodiment, the processing of the monitored wave data to obtain processed wave data may be performed in the time domain. This may allow processing the monitored wave data in quicker way than, e.g., in the frequency domain. Furthermore, using the time domain may allow analyzing the time course of the monitored wave data, e.g. to identify a trend. It may further allow analyzing the amplitude course of the monitored wave. Thus, the monitored wave data may be analyzed in a fast and reliable manner.

According to an embodiment, the method may further comprise obtaining reference value data in association with the monitored wave data, wherein the reference value data is indicative of an operating condition of the floating wind turbine and/or of an environmental condition of the floating wind turbine. As a result, the reference value data may be linked to real operating conditions. Thus, it may be determined in a reliable manner if a predetermined sea state is present. The monitored wave data may be associated with the reference value data if they have been recorded, e.g. measured, during the same or a corresponding period of time.

According to an embodiment, the threshold indicating the presence of a predetermined sea state is determined based on the reference value data associated with the wave data that is compared to the threshold. In particular, a value of the threshold may depend on a value of the reference value data, i.e. the thresholds may be variable. For example, the threshold may change for different values for the reference value data. The dependency may be a linear dependence, e.g. using one, two, or more sections of different slope, or a more complex dependency may be used, such as a polymeric function. Thus, it may be determined more accurately if a sea state is actually present that requires activation of the protective function, as such variable threshold may better distinguish between normal and severe sea stated. For example, if strong winds are present, an inclination sensor may deliver a signal of higher amplitude although the sea state is still acceptable - thus, by making the threshold dependent on the reference value data, unnecessary shut-downs of the FWT may be avoided.

The reference value data and the processed wave data may form respective data pairs. Preferably, each monitored wave data value maybe associated with a respective reference data value. Both may for example be monitored together (at the same or different sample rates).

For each value of the reference value data, a respective value of the threshold may be provided. As an example, a look-up table may be used, or a mathematical function may be used to derive for an obtained value of the reference value data the associated value for the threshold. The threshold may thus be obtained fast and efficiently for a monitored value of the reference value data.

According to an embodiment, the reference value data comprises at least one of a wind speed to which the floating wind turbine is exposed and/or a rotor speed of a rotor of the floating wind turbine and/or a power output of the floating wind turbine. By using this reference value data, it may be possible to use information which may be acquired during normal operation of the wind turbine. In particular, it may be possible to use sensors, which are already installed as part of the wind turbine, in order to obtain such reference value data.

According to an embodiment, the threshold is stored as threshold data as a function of or in association with the reference value data, wherein the method further comprises retrieving the threshold data prior to said comparing. As mentioned, it may for example be stored in form of a lookup table or as parameters of a function. As the threshold data is already stored, the processed wave data may be directly compared to a threshold retrieved based on the reference value data that is associated with the obtained wave data. Thus, the determination if the protective function needs to be activated can be performed in an efficient and fast manner. Furthermore, computational efforts to update the threshold may be reduced or avoided completely, once the threshold data has been stored. The threshold data may be determined before the floating wind turbine is operated using the method. Furthermore, the threshold data may remain unchanged during an operation of the wind turbine.

In another embodiment, the threshold may comprise a constant threshold. This may allow the method to be implemented in the simplest manner and thus may allow a cost-effective integration into an already existing wind turbine setup. In addition, the determination of the threshold may be facilitated, and the processed wave data may be compared to the threshold in a faster manner.

The threshold indicating the presence of a predetermined sea state may be derived by using a model of the floating wind turbine. For example, during wind turbine design, a design simulation may be employed that simulates the floating wind turbine behavior and the respective sensor signals for different sea states, including normal and severe sea states. Monitored wave data may thus be obtained for different sea states, and the threshold for the processed wave data may be set so as to protect the wind turbine from the extreme loads occurring during a severe sea state. In other embodiments, calibration data may be recorded for the monitored parameter for a particular wind turbine over a period of time for different sea states and the threshold may be set based on the recorded calibration data. This may facilitate implementation into already existing floating wind turbine setups.

According to an embodiment, the obtained monitored wave data is directly processed without deriving a measure of the wave height of the waves. As the obtained wave data is used without deriving a measure of the wave height of the waves, high calculational efforts and complex models for the derivation may be avoided. Consequently, it may be possible to obtain a quick determination if the protective function needs to be activated, which may timely counteract unfavorable loads on one or plural wind turbine components.

In an embodiment, the obtained monitored wave data is or comprises a monitored motion parameter of the floating wind turbine, wherein the monitored motion parameter is preferably at least one of a roll motion, a pitch motion, a surge motion, a sway motion, or a heave motion for a floater, tower or nacelle of the floating wind turbine. Additionally or alternatively, the obtained monitored wave data is or comprises a monitored load parameter of the floating wind turbine, wherein the monitored load parameter is preferably a bending moment of one or more rotor blades of the floating wind turbine, such as an out of plane bending moment, and/or is a bending moment of a tower of the floating wind turbine. This monitored motion parameter and/or load parameter may then be processed and the processed parameter may be (directly) compared to the threshold, as described above. By using such rather direct evaluation of a monitored parameter, complex modeling and calculations may be avoided and detection of the sea state to which the FWT is exposed may be facilitated.

According to an embodiment, the monitored wave data is monitored by one or more monitoring units, wherein the one or more monitoring units comprise one or more direct and/or indirect monitoring devices. The one or more monitoring units may already be installed as part of the existing wind turbine setup or may be external devices. Using the one or more direct monitoring devices may allow obtaining a quick and reliable solution to obtain information about a wave height of the waves acting on the wind turbine. By using indirect monitoring devices, e.g. installed on a component of the wind turbine, an unfavorable load on this component due to the sea state may be detected and as a result the protective function may be activated. This may ensure a reliable determination if a predetermined threshold is reached and thus if a detrimental sea state is present.

According to an embodiment, the one or more direct monitoring devices preferably comprise a wave buoy and/or a wave radar, wherein the wave buoy and/or the wave radar are configured to monitor an actual sea state at a site of the wind turbine. By using the monitored wave data of the wave buoy and/or wave radar indicating an actual sea state to which the wind turbine is exposed, a direct measure of the wave height may be obtained.

The one or more indirect monitoring devices may comprise one or a combination of an accelerometer, an inclinometer, an Inertial Measurement Unit (IMU), a Motion Reference Unit (MRU) or a blade load monitor. As these indirect monitoring devices are normally part of and directly installed on a conventional FWT, the implementation of the method into an already existing FWT setup may be facilitated and thus further costs may be avoided.

According to an embodiment, processing the obtained monitored wave data comprises processing monitored wave data obtained over a predetermined time interval, wherein the predetermined time interval has a length between 0.1 and 20 minutes, preferably between 1 and 15 minutes. In particular, the predetermined time interval may comprise a length of 10 minutes. Processing the monitored wave data of a predetermined time interval may allow the exclusion of single maximum values that are above the threshold, e.g. by smoothing, such as averaging. This may allow the exclusion of such outliers that may lead to an activation of the protective function although no severe sea state is present. Thus, an unnecessary activation of the protective function of the wind turbine may be avoided.

According to an embodiment, the processing by descriptive statistical analysis comprises at least one of determining a measure of location of the wave data, preferably a mean and/or a tendency; determining a measure of statistical dispersion of the wave data, preferably a standard deviation and/or spread; determining a mean amplitude, a mean maximum value, and/or mean minimum value of the wave data; determining a measure of location and/or a measure of statistical dispersion in a spectrum of the wave data; determining a measure of a shape of a distribution of the wave data and/or of a spectrum of the wave data. Using these descriptive statistical analysis techniques may allow filtering out the maximum outliers in the monitored wave data whilst still keeping a low processing effort. Further, the processing may allow a clear distinction between normal sea state and severe sea state. Consequently, a false activation of the protective function of the wind turbine may be avoided. Furthermore, the processing may be performed in a quick manner. The processing may occur by respective digital data processing, and/or may occur by means of a respective filter that filters the obtained monitored wave data.

According to an embodiment, the activation of the protective function comprises activating a load mitigation action, preferably based on the processed wave data. For example, depending on the processed wave data, e.g. the degree of exceedance of the threshold, a more or less severe mitigation action may be taken (e.g. more or less curtailment of power production). By activating a load mitigation action, the load on the wind turbine components may be reduced. Thus, the risk of damages due to a severe sea state acting on the FWT may be mitigated.

According to an embodiment, activating the load mitigation action comprises at least one of limiting a power production of the wind turbine, limiting a rotational speed of a rotor the wind turbine, redefining a cut-out wind speed for the wind turbine, or shutting down the wind turbine.

Preferably, in a first load mitigation action, the power production of the wind turbine is limited, e.g. by limiting the rotational speed of the rotor of the wind turbine. Subsequently, if the load on the wind turbine component is still exceeding acceptable operation conditions of the FWT, or if the sea state becomes more severe, the cut-out wind speed may be redefined. In case the load on the wind turbine components is still exceeding the load limit subsequent to the application of these load mitigation actions, the wind turbine may be shut down. By such stepwise mitigation actions, a shutting down of the wind turbine may be avoided and thus power production may be upheld.

The floating wind turbine may have a semi-submersible floating foundation or a spar-type floating foundation. Other floating foundations (floaters) that allow a wave-induced motion of the FWT are also conceivable. The FWT may in particular be configured to allow one or a combination of a floater, tower, and/or nacelle roll motion, pitch motion, heave motion, surge motion, or sway motion. One or more corresponding motion parameters of the allowed motions may be monitored, as these may be indicative of wave height.

It may also be possible to apply the method to a wind farm comprising a plurality of wind turbines, wherein the processing comprises averaging monitored wave data from one or more monitoring units installed on each of the plurality of wind turbines. The averaged monitored wave data may further be processed (e.g. deriving of standard deviation or the like) and is then compared with the threshold in order to estimate if a predetermined sea state is present. If the processed monitored wave data exceeds the threshold, a protective function may be activated, which may control the plurality of wind turbines of the wind park so as to mitigate the respective load acting on one of the plurality of wind turbines.

Although the description herein refers to sea state, it should be clear that a floating wind turbine may be installed both, on sea, in particular in an offshore environment, or in a lake, so that the term "sea state" also encompasses water surface conditions of a lake. Lakes are however often shallow enough so as to not require floating wind turbine installations.

According to a further embodiment, the method may further comprise generating, by the wind turbine, electrical power and/or electrical energy during operation; and transmitting at least a part of the generated electrical power and/or electrical energy to an electrical receiving arrangement. The electrical receiving arrangement may not be positioned in international waters, it may for example be positioned onshore and/or may be positioned within a 12-miles-zone of a respective sovereign national state over which the respective state has jurisdiction. The method further comprises supplying at least a part of the electrical power and/or of the electrical energy to an electrical utility grid, in particular to an onshore electrical utility grid. By such method, the loss of energy production due to an unnecessary triggering of the mitigation action (e.g. due to a wrong prediction of the sea state from forecasted weather conditions) may be reduced, so that more energy may be supplied to the electrical utility grid.

According to a further aspect of the invention, a control system for controlling the operation of a floating wind turbine, FWT is provided. The floating wind turbine is exposed to waves during operation, the waves causing a wave induced motion of the floating wind turbine, wherein the wind turbine is configured to operate a protective function as described herein above. The control system is configured to perform a method according to any of the aspects, embodiments and examples described herein. By such control system, advantages similar to the ones outlined further above may be achieved.

The control system may further comprise any of the elements mentioned herein with respect to the method. It may in particular comprise one or more of the sensors mentioned herein, in particular a sensor providing a signal corresponding to the monitored wave data (e.g., motion sensor measuring nacelle motion, in particular acceleration, a motion sensor measuring floater motion, or the like).

According to a further aspect of the present invention, a wind turbine comprising a respective control system is provided.

According to a further aspect of the invention, a computer program for controlling the operation of a floating wind turbine, FWT, is provided. The floating wind turbine is configured to operate a protective function. The computer program comprises control instructions which, when executed by a processing unit of a control system of the floating wind turbine, cause the processing unit to perform the method of any of the aspects, embodiments and examples disclosed herein. Such computer program, in particular the respective control instructions, may be provided on a volatile or nonvolatile storage medium or data carrier, and/or may be provided via a communication connection, such as a wired or wireless network connection.

According to a further aspect of the invention, a method for calibrating a threshold corresponding to a predetermined sea state for operating a floating wind turbine, FWT, is provided. The threshold is a threshold for processed wave data, and the thresholds optionally depends on reference value data. The method comprises: obtaining monitored wave data indicative of a normal sea state and of a severe sea state; processing the monitored wave data to obtain processed wave data indicative of a normal sea state and of a severe sea state, wherein the processing comprises at least a processing by descriptive statistical analysis; and determining the threshold, wherein a value of the threshold is set to a value below a value of the processed wave data corresponding to the severe sea state and above a value of the processed wave data corresponding to the normal sea state. Such method may be a computer implemented method that may be performed automatically. In such calibration, the monitored wave data may also be termed calibration data. The monitored wave data indicative of a normal sea state or a severe sea state may be obtained by employing a model of the wind turbine and simulating the behavior of the wind turbine at the respective sea states. The model may output simulated monitored wave data, e.g. by simulating the output of a respective sensor or monitoring unit. The simulated monitored wave data may be provided as calibration data for calibrating the threshold.

Additionally or alternatively, the calibration data may be obtained by monitoring the operation of a floating wind turbine (e.g. the actual wind turbine for which the threshold is to be calibrated). The calibration data may be obtained for different sea states by one or more monitoring units and over a time period, e.g. 1 month, 6 months or a year. In each case, optionally, reference value data may be obtained in association with the monitored wave data, and the threshold may be set for monitored wave data in dependence on the associated reference value data. The threshold may be set by, e.g., populating respective threshold values in a lookup table, determining parameters of a threshold function or the like.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing illustrating a side view of a floating wind turbine.
Fig. 2 is a diagram schematically illustrating wind speed, wave elevation, floater pitch motion, and tower bending moments of a FWT over time.
Fig. 3 is a diagram schematically illustrating a significant wave height against a wind speed.
Fig. 4 is a schematic drawing illustrating a floating wind turbine including a control system according to an embodiment.
Fig. 5 is a flow diagram illustrating a method of operating a FWT according to an embodiment.
Fig. 6 is a schematic diagram illustrating a standard deviation of a wave elevation for different sea states and different wind speeds according to an embodiment.
Fig. 7 is a schematic diagram illustrating a standard deviation of a floater pitch angle for different sea states and different wind speeds according to an embodiment.
Fig. 8 is a schematic diagram illustrating a mean average moment change for different sea states and different wind speeds according to an embodiment.
Fig. 9 is a schematic diagram illustrating a standard deviation of floater heave acceleration for different sea states and different wind speeds and a wind speed dependent threshold corresponding to a predefined sea state according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

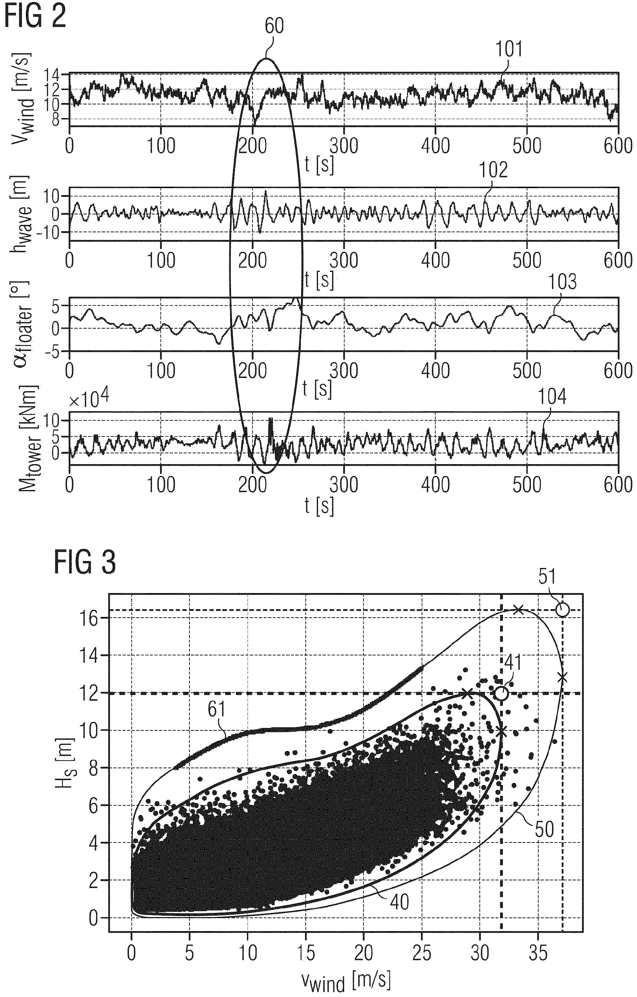

Fig. 2 shows the time course of a monitored wind speed v_{wind} 101, a monitored wave height h_{wave} 102, a monitored floater pitch angle αpitch 103 and a monitored tower bending moment M_{tower} 104 for a floating wind turbine 1. The circle 60 over the data curves corresponds to a time when the highest wave is impinging on the floating wind turbine. As a result of this maximum wave height, a maximum tower bending moment is acting on the tower of the wind turbine. As can be seen from this example, such high wave, which occur with a higher probability during severe sea state conditions, may lead to a high load that is acting on the components of the wind turbine 1.

It is desirable to avoid such extreme loads on the floating wind turbine. It has however been found that by taking a counter-measure when such extreme load occurs, e.g. by stopping the FWT at this moment, might not be a viable solution as this may lead to an improver and unfavorable situation which may potentially increase the loads significantly. This may be avoided by the solution described further below.

Fig. 3 shows how a predetermined sea state, in this case a severe sea state, may be defined. The diagram shows different measurement points for significant wave height, Hs, (vertical axis) for different wind speeds (horizontal axis). A severe sea state may be a condition in which the wave height causes a load on the components of the floating wind turbine 1 that is not within the normal operating range of the components of the wind turbine 1. The determination of the significant wave height Hs at a severe sea state (SSS) may include the extrapolation of appropriate site-specific metocean data such that the combination of the significant wave height conditioned on the mean wind speed may have a return period of 50 years. To improve convergence, the severe sea state may optionally include the extreme individual wave height that, in combination with the associated wave period and the mean wind speed, has a return period of 50 years.

For all mean wind speeds, the unconditional extreme significant wave height Hs50 with a return period of 50 years may be used as a conservative value for the severe sea state (SSS). Similarly, it is conservative to adopt the unconditional extreme significant wave height Hs50 for the extreme wave height in the severe sea state. This approach may be used in the absence of information defining the long-term joint probability distribution of wind and waves.

An environmental contour approach may be used in order to derive a severe sea state condition from the significant wave height data, as shown in Fig. 3. More specifically, an Inverse First Order Reliability Method (IFORM) may be used in order to obtain a 2-D contour of wind speed and significant wave heights. In figure 3, the 50 years environmental contour 50, and the 1 year environmental contour 40 are shown. The severe sea state, SSS, contour 61 is defined as belonging to the contour of the 50 year return period between cut-in and cut-out wind speeds of the FWT (4 and 25 m/s in this example). Furthermore, the line tangents of the respective contours of the employed IFORM method are shown as dashed lines and the intersections of these line tangents are indicated by the points 41 and 51, respectively.

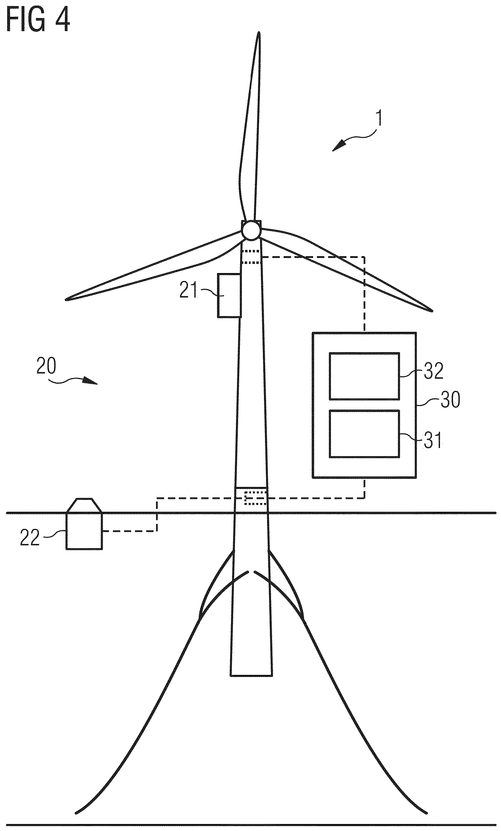

Fig. 4 schematically illustrates a floating wind turbine 1 including a control system 30 according to an embodiment. The control system 30 may comprise a processing unit 31 and a memory 32. The wind turbine 1 may comprise one or more motoring units 20, which may comprise one or more direct or indirect monitoring devices. In the present example, the system comprises a direct measurement device 22, which may be a wave buoy or a wave radar and an indirect measurement device 21, which may be one or a combination of an accelerometer, an inclinometer, an Inertial Measurement Unit (IMU), a Motion Reference Unit (MRU) or a blade load monitor.

Control system 30 may be arranged in the nacelle, tower, or in or on the floater, or at any other conceivable location. Processing unit 31 may be a micro-processor, a digital signal processor, an application-specific integrated circuit, or the like. Memory 32 may comprise RAM, ROM, Flash-Memory, a hard disk drive and other types of memory. Memory 32 may store control instructions which, when executed by processing unit 31, cause the control system 30 to perform any of the methods disclosed herein. Control system 30 may be distributed to plural controllers and may accordingly comprise plural processing units and plural memories. Control system 30 is further configured to obtain wave information that is indicative of waves to which the FWT 1 is exposed. Control system 30 may comprise a corresponding interface to receive such wave information from an external source, e.g. from the direct measurement device 22, a floating vessel, one or more other floating wind turbines, or from a service, such as a weather service or another monitoring service that monitors the sea state. Control system 30 may comprise an interface to the indirect measurement device 21 or may comprise the indirect measurement device 21 that measures a signal indicative of a wave height of the waves.

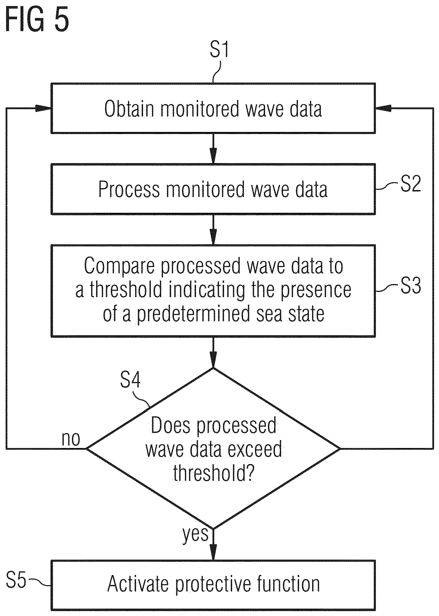

Fig. 5 is a flow diagram that illustrates an exemplary implementation of a method that may be carried out by the control system 30 of the FWT 1 of Fig. 4. The first method step S1 comprises obtaining monitored wave data indicative of a wave height of the waves. The wave data may be monitored by the one or more monitoring units 20. The monitoring units may comprise the one or more direct 22 or indirect monitoring devices 21 and the control system 30 may obtain the monitored wave data from the respective monitoring device of the monitoring unit 20.

In a second step S2, the monitored wave data may be processed by the processing unit 31 of Fig. 4 to obtain processed wave data by using descriptive statistical analysis. The descriptive statistical analysis may comprise determining a measure of location of the wave data, preferably a mean and/or a tendency, determining a measure of statistical dispersion of the wave data, preferably a standard deviation or spread, determining a measure of location and/or a measure of statistical dispersion in a spectrum of the wave data, determining a measure of a shape of a distribution of the wave data.

As can be seen from Fig. 2, the monitored wave height only reaches its maximum for a few seconds and afterwards a normal wave height may again be observed. By processing the monitored wave data by using descriptive statistical analysis, such an outlier from the other monitored wave data points may be filtered out. Thus, an unnecessary activation of the protective function of the wind turbine may be avoided. Using descriptive statistical analysis to process the monitored wave data may further allow detecting conditions, which may lead to unfavorable loads of the wind turbine components, before these may build up. The protective function can thus be activated in time in order to avoid such loads.

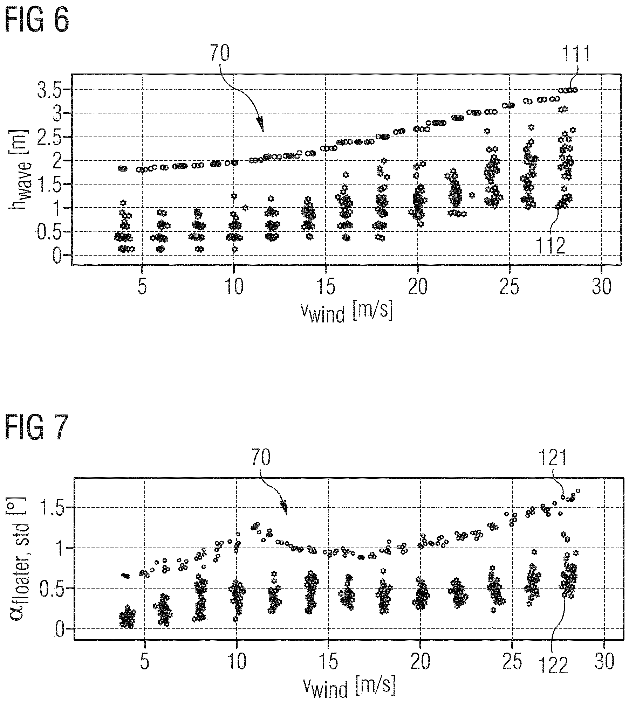

Fig. 6 shows such processed wave data, in this case obtained by a direct measurement device 22. The direct measurement device 22 may comprise a wave buoy or a wave radar. The x axis corresponds to reference value data, in this case the wind speed v_{wind} the wind turbine is subjected to, and the y axis corresponds to the processed wave data in form of the standard deviation of the measured wave elevation h_{wave}.

Peaks of the obtained monitored wave data may lead to an unintended activation of the protection function. Thus, the processing may facilitate that the processed waved data is used in the further evaluation instead of a single extreme wave event. In the present example the standard deviation of the monitored wave data in a predetermined time interval is used to process the monitored wave data.

Optionally, prior to or after processing, the monitored or processed wave data may be filtered, e.g. by a low pass or band pass filter. The filter may be configured such that only the dynamic in the frequency range of the wave band is passed and thus further used in the method. Thus, the structural natural frequencies of the floater, tower or rotor nacelle assembly may be removed and may be disregarded, which may make the determination of the sea state more accurate.

The monitored wave data may be processed over a predetermined time interval of 10 minutes. Alternatively, it may be possible to process the monitored wave data over a predetermined time interval of a length between 1 and 20 minutes.

The processing may be performed in the time domain or in the frequency domain. Preferably, the processing may be performed in the time domain. This may allow processing the monitored wave data in quicker way than, e.g., in the frequency domain. Furthermore, using the time domain may allow analyzing the time course of the monitored wave data and the amplitude course of the monitored wave. Thus, the processed monitored wave data may be analyzed in a rapid and reliable manner.

In Fig. 6, points 112 correspond to the processed wave elevation in case of a normal sea state and points 111 correspond to the case in which a severe sea state is present. As can be seen, in the case of a severe sea state the wave elevation is elevated significantly for every corresponding wind speed reference value in comparison to a normal sea state condition.

Fig. 7 shows processed wave data, in this case obtained by an indirect measurement device 21. The indirect measurement device 21 may comprise an accelerometer, an inclinometer, an Inertial Measurement Unit, a Motion Reference Unit or a blade load monitor. Thus, the monitored wave data may correspond to one of a floater pitch angle, heave motion, nacelle acceleration, floater heave acceleration, average moment of the change of the floater or the bending moment of the blades, the bending moment of the tower of the wind turbine, or any other related motion or loading. In this case, the standard deviation of the floater pitch angle α_{float,std} is depicted dependent on the wind speed v_{wind}. Points 122 correspond to the case of a normal sea state. Points 121 correspond to the case in which a severe sea state is present. Similarly to the case in which a direct measuring device is used, the values 121 of the floater pitch angle standard deviation are elevated in a severe sea state condition compared to the values 122 of a normal sea state. As can be taken from the diagrams of figures 6 and 7, by the statistical processing of the monitored wave data, it becomes possible to clearly distinguish between a normal sea state and a severe sea state, even though the processing is done in a fast and efficient way without employing complex models and without the need to derive the actual wave height, wave direction or the like.

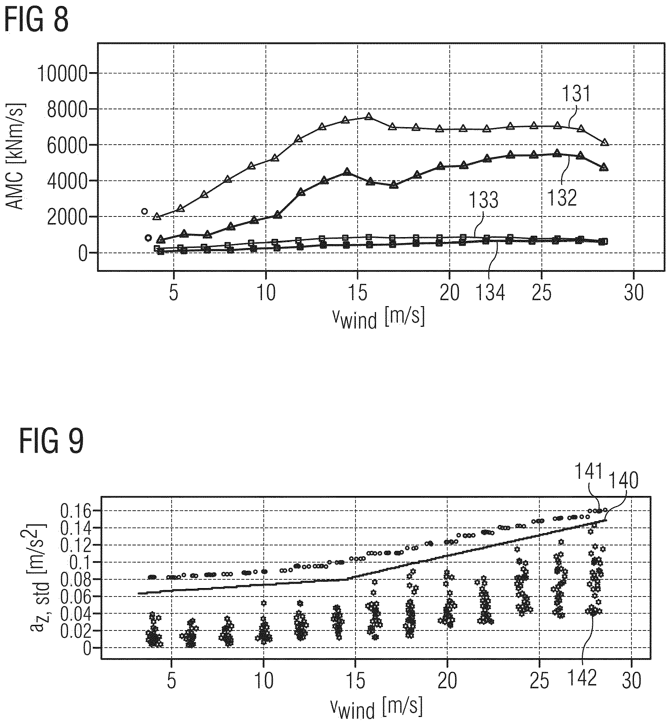

Fig. 8 also shows processed wave data obtained by an indirect measurement device 21. In this case, the average out of plane moment change AMC is depicted dependent on the wind speed v_{wind}. The out of plane moment may be monitored directly from blade load sensors that may be already present in floating wind turbines. In the illustrated case, the wind turbine 1 comprises three rotor blades.

Processing the monitored wave data of the out of plane moments comprises in a first step using a moment transformation as a coordinate transformation using the blade load measurements in flap and edge directions combined with the pitch angle for each blade and in a second step obtaining an average of the monitored out of plane moments including data of all three rotor blades. Subsequently, a low-pass filtering of the average out of plane moment in order to avoid the inclusion of a tower frequency and other higher frequencies may be applied. In a third step, a time derivative of the average out-of-plane moment is obtained.

Fig. 8 shows the average of the maximum out of plane moment change contours obtained over a period of ten minutes for normal sea state 132 and one hour for severe sea state 131 and the average of the mean out of plane moment change contour obtained over a period of ten minutes for normal sea state 134 and one hour for severe sea state 133. Similar to the other types of wave data, when comparing the values of the out of plane moment changes in a severe sea state and in a normal sea state, the out of plane values are elevated in a severe sea state 131, 133 compared to the values of a normal sea state 132, 134. This again allows using this monitored wave data for distinguishing between normal and severe sea states.

In the case of Fig. 9, once again the standard deviation of the monitored wave data, here of the floater heave acceleration a_{z, std}, in a predetermined time interval is determined when processing the monitored wave data. This yields data points 142 in case of a normal sea state and data points 141 in the case of a severe sea state. Again, the two cases can be clearly distinguished from each other.

Turning back to Fig. 5, in a next step S3, the processed wave data is compared to a threshold indicating a presence of a predetermined sea state. The threshold is represented by line 140 in Fig. 9.

The threshold may be determined in advance by calibration using a model of the wind turbine to simulate monitored wave data for different sea states. This may occur during a design phase of the wind turbine or later. Simulated processed wave data may then be derived in correspondence to the processed wave data for which the threshold is to be determined. It is also possible to perform a calibration of the threshold using monitored wave data collected from an actual wind turbine. For example, calibration data for the monitored parameter may be obtained over a time period, e.g. 1 month, 6 months or a year, in order to obtain processed wave data for different sea states as reference data for the calibration. The threshold may then be determined so as to correspond to data values which are between the modelled/monitored processed wave data values corresponding to the severe sea state and the normal sea state.

The method may optionally include obtaining reference value data in association with the monitored wave data. The reference value data may be indicative of an operating condition of the floating wind turbine 1 and/or of an environmental condition of the floating wind turbine 1. In the example of Figs. 6-9, the reference value data is the wind speed the wind turbine 1 is subjected to. The threshold may depend on the reference value data, as illustrated in Fig. 9. Furthermore, the processed wave data may be associated with the reference value data. The processed wave data and the reference value data may form data pairs, so that a value of the reference value data is available for each value of the processed wave data. It may be possible to obtain the reference value data, e.g. the wind speed the wind turbine is subjected to, in a step S1. In step S3, the threshold is determined from the obtained reference value data, e.g. by retrieving it from a lookup table or from a function modeling the threshold.

Exemplarily, the threshold 140 that depends on wind speed is shown in Fig. 9 as a function composed of two line sections having different slope.

By using a threshold that depends on the reference value data, such as the wind speed, a more accurate sea state identification may be achieved and the risk that the running FWT is exposed to extreme waves is reduced. Further, the computational efforts for determining whether the processed wave data exceeds the threshold may be kept as low as possible.

In a subsequent step S4 in Fig. 5, the processed wave data is compared to the threshold, which may be indicative of the presence of a predetermined sea state. If the comparison yields that the processed wave data is below the threshold 140, the method may return to step S1. This scenario would for example correspond to the processed wave data 142 indicating a normal sea state in Fig. 9. If the comparison yields that the processed wave data is above the threshold, the method may continue in step S5. This case may be represented by the processed wave data points 141 of Fig. 9 representing the severe sea state, which lie above the threshold.

If the threshold is exceeded by the processed wave data, in a next step S5 of Fig. 5, a protective function of the wind turbine is activated in order to reduce high loads on wind turbine components, which may be associated with a severe sea state condition. Different load mitigation actions may be available and may be activated in dependence on the processed wave data (e.g. depending on the level by which the threshold is exceeded). The activation of the load mitigation action comprises at least one of limiting a power production of the wind turbine 1, limiting a rotational speed of a rotor the wind turbine 1, redefining a cut-out wind speed for the wind turbine, or shutting down the wind turbine. The method may then return to step S1, in order to obtain new monitored wave data, which may be used determine whether the threshold is still exceeded by the newly processed wave data. If the threshold is still exceeded the load mitigation may be upheld. If the processed wave data has a value below the threshold, the load mitigation may be de-activated and the wind turbine 1 may return to normal operation.

Thus, the implementation of the method may reduce extreme loads such as a tower bottom bending moment, tip-to-tower clearance, blade root flap and edgewise and hub bending without stopping the wind turbine and thus the power production, or stopping the power production only when it is really necessary. Further, compared to conventional methods that rely on weather forecast to predict sea state and that shut down FWTs as a precautionary measure, unnecessary shut-downs may be prevented.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A method of operating a floating wind turbine (1), FWT, wherein the floating wind turbine (1) is exposed to waves during operation, the waves causing a wave induced motion of the floating wind turbine, wherein the floating wind turbine (1) is configured to operate a protective function, wherein the method comprises:
obtaining, during operation of the floating wind turbine (1), monitored wave data (70) indicative of a wave height of the waves to which the floating wind turbine (1) is exposed during operation;
processing the monitored wave data to obtain processed wave data, wherein the processing comprises at least a processing by descriptive statistical analysis;
comparing the processed wave data to a threshold (140) that corresponds to a predetermined sea state; and
activating the protective function upon detecting that the processed wave data reaches or exceeds the threshold (140).

2. The method according to any of the preceding claims, wherein the method further comprises obtaining reference value data in association with the monitored wave data (70), wherein the reference value data is indicative of an operating condition of the floating wind turbine (1) and/or of an environmental condition of the floating wind turbine (1).

3. The method according to claim 2, wherein the threshold (140) is determined based on the reference value data associated with the wave data that is compared to the threshold (140).

4. The method according to claim 2 or 3, wherein the reference value data comprises at least one of a wind speed to which the floating wind turbine (1) is exposed and/or a rotor speed of a rotor of the floating wind turbine (1) and/or a power output of the floating wind turbine (1).

5. The method according to any of claims 2-4, wherein the threshold (140) is stored as threshold data as a function of or in association with the reference value data, wherein the method further comprises retrieving the threshold data prior to said comparing.

6. The method according to any of the preceding claims, wherein the obtained monitored wave data (70) is directly processed without deriving a measure of the wave height of the waves.

7. The method according to any of the preceding claims, wherein the obtained monitored wave data (70) is or comprises a monitored motion parameter of the floating wind turbine, wherein the monitored motion parameter is preferably at least one of a roll motion, a pitch motion, a surge motion, a sway motion, or a heave motion for a floater, tower or nacelle of the floating wind turbine, and/or a monitored load parameter of the floating wind turbine, wherein the monitored load parameter is preferably a bending moment of one or more rotor blades of the floating wind turbine, such as an out of plane bending moment.

8. The method according to any of the preceding claims, wherein the monitored wave data (70) is monitored by one or more monitoring units (20), wherein the one or more monitoring units comprise one or more direct (22) and/or indirect monitoring devices (21), wherein the one or more direct monitoring devices (22) preferably comprise a wave buoy and/or a wave radar, wherein the wave buoy and/or the wave radar are configured to monitor an actual sea state at a site of the wind turbine (1), and wherein the one or more indirect monitoring devices (21) preferably comprise one or a combination of an accelerometer, an inclinometer, an Inertial Measurement Unit (IMU), a Motion Reference Unit (MRU) or a blade load monitor.

9. The method according to any of the preceding claims, wherein the processing of the monitored wave data to obtain processed wave data is performed in the time domain.

10. The method according to any of the preceding claims, wherein processing the obtained monitored wave data comprises processing monitored wave data (70) obtained over a predetermined time interval, wherein the predetermined time interval has a length between 0.1 and 20 minutes, preferably between 1 and 15 minutes.

11. The method according to any of the preceding claims, wherein the processing by descriptive statistical analysis comprises at least one of:
determining a measure of location of the wave data, preferably a mean and/or a tendency;
determining a measure of statistical dispersion of the wave data, preferably a standard deviation and/or spread;
determining a mean amplitude, a mean maximum value, and/or a mean minimum value of the wave data;
determining a measure of location and/or a measure of statistical dispersion in a spectrum of the wave data; and/or
determining a measure of a shape of a distribution of the wave data and/or of a spectrum of the wave data.

12. The method according to any of the preceding claims, wherein the activation of the protective function comprises activating a load mitigation action, wherein the load mitigation action preferably depends on the processed wave data.

13. The method according to claim 12, wherein activating the load mitigation action comprises at least one of limiting a power production of the wind turbine (1), limiting a rotational speed of a rotor the wind turbine (1), redefining a cut-out wind speed for the wind turbine (1), or shutting down the wind turbine (1).

14. A control system for controlling the operation of a floating wind turbine (1), FWT, wherein the floating wind turbine (1) is exposed to waves during operation, the waves causing a wave induced motion of the floating wind turbine (1), wherein the wind turbine (1) is configured to operate a protective function, wherein the control system is configured to perform the method of any one of the preceding claims.

15. A computer program for controlling the operation of a floating wind turbine (1), FWT, wherein the floating wind turbine (1) is configured to operate a protective function, wherein the computer program comprises control instructions which, when executed by a processing unit of a control system of the floating wind turbine (1), cause the processing unit to perform the method of any of claims 1-13.
